# EUROPEAN PATENT APPLICATION

(11) **EP 2 708 713 A1**
(43) Date of publication of application: **19.03.2014**
(21) Application number: 13159004.4
(22) Date of filing: 13.03.2013
(51) Int. Cl.: F02B 23/06

(54) **Combustion bowl shape of direct injection diesel engine for reducing the soot emission**

(30) Priority: 14.09.2012 KR 20120102328
(71) Applicant: Doosan Infracore Co., Ltd., Dong-gu Incheon 401-020 (KR)
(72) Inventor: Yoo, Doc Koon, 448-795 Yongin-si (KR); Kim, Chung Min, 401-020 Incheon (KR); Ahn, Jong Mo, 401-020 Incheon (KR); Han, Dae Sung, 401-020 Incheon (KR); Yu, Jin Hwan, 401-020 Incheon (KR); Jung, Wook, 401-020 Incheon (KR); Kim, Duk Sang, 448-795 Yongin-si (KR)
(74) Representative: Isarpatent

(57) **Abstract**

The present disclosure relates to a combustion bowl shape of a direct injection diesel engine for reducing soot. The combustion bowl shape of the direct injection diesel engine for reducing soot according to the present disclosure includes: a lip part protruding from an internal circumferential surface; a main combustion bowl formed at a lower side based on the lip part; and a sub combustion bowl formed at an upper side based on the lip part, in which a diameter ratio of a combustion bowl entrance diameter of the sub combustion bowl to a main combustion bowl maximum diameter of the main combustion bowl is 1.10 to 1.40.

## Description

### TECHNICAL FIELD

The present disclosure relates to a combustion bowl shape of a direct injection diesel engine for reducing soot, and more particularly to, a combustion bowl shape of a direct injection diesel engine for reducing soot, which reduces soot included in exhaust gas by improving a combustion bowl shape in which fuel is combusted at a head portion of a piston.

### BACKGROUND

A diesel engine repeats one cycle including an air suction stroke, an air compression stroke, an explosion stroke right after fuel injection, and an exhaustion stroke.

In the explosion stroke, fuel is injected to the air at high temperature and high pressure, and the injected fuel is expanded while being self-ignited and combusted at the high temperature and high pressure air, and a piston moves down when the fuel is expanded to generate kinetic energy.

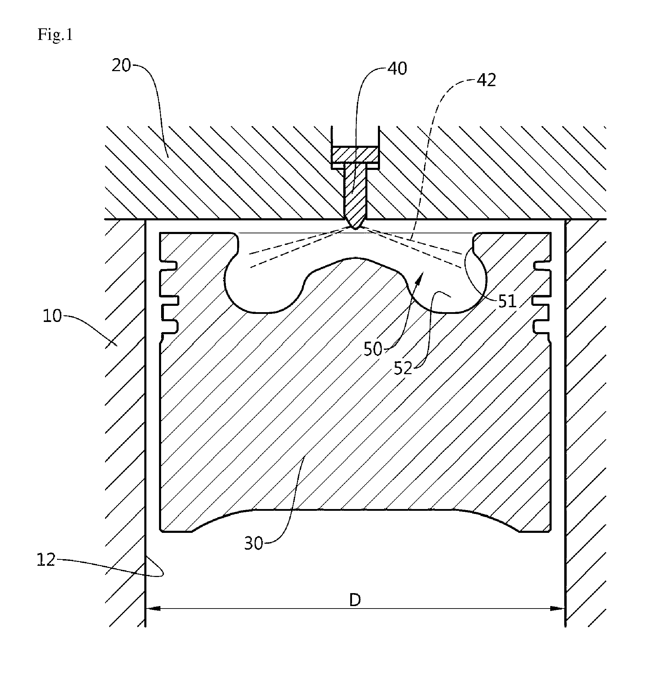

A method of directly injecting fuel as described above is referred to as a direct injection diesel engine, which will be described in more detail with reference to of FIG. 1.

FIG. 1 is a diagram for describing a combustion bowl shape of a direct injection diesel engine for reducing soot.

As illustrated in FIG. 1, a cylinder liner 12 is formed inside a cylinder block 10, a piston 30 is disposed in the cylinder liner 12, and a cylinder head block 20 is disposed on an upper side of the cylinder block 10. An injector 40 is installed in the cylinder head block 20, and fuel is injected from the injector 40.

A combustion bowl 50 is formed at an upper end of the piston 30. The fuel injected from the aforementioned injector 40 is injected toward a specific target point from an internal side of the combustion bowl 50.

The injected fuel is self-ignited in a high-temperature and high-pressure environment to be exploded, thereby strongly moving down the piston 30 to obtain kinetic energy of a sudden fall of the piston 30. Then, a swing movement is converted to a rotary movement by a crank shaft, and rotary movement power is output.

As described above, the fuel is combusted when the fuel is self-ignited and exploded, and air contaminants, such as soot (dust, and the like) and nitrogen oxide (NOx), are generated during a combustion process. The combustion bowl has been researched and developed so as to have a shape in which fuel and air are sufficiently combined to be completely combusted. It is known that a mixing action of air and fuel is influenced according to the shape of the combustion bowl 50.

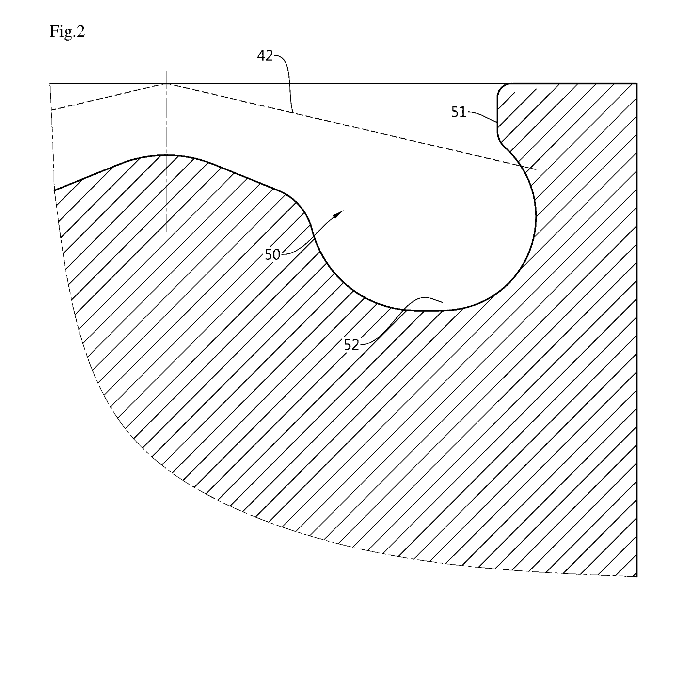

The known shape of the combustion bowl 50 will be described with reference to FIG. 2.

FIG. 2 is a diagram for describing the combustion bowl in the related art.

In the combustion bowl 50 illustrated in FIG. 2, a protruding internal circumferential surface 51 protrudes toward a center of an inside diameter, a main combustion bowl 52 is formed at a lower side of the protruding internal circumferential surface 51, and a sub combustion bowl 53 is formed at an upper side of the protruding internal circumferential surface 51.

In the combustion bowl 50 of the related art, fuel is injected from the injector 40 to the combustion bowl 50, and air and the fuel are mixed and combusted in the combustion bowl 50, and then discharged.

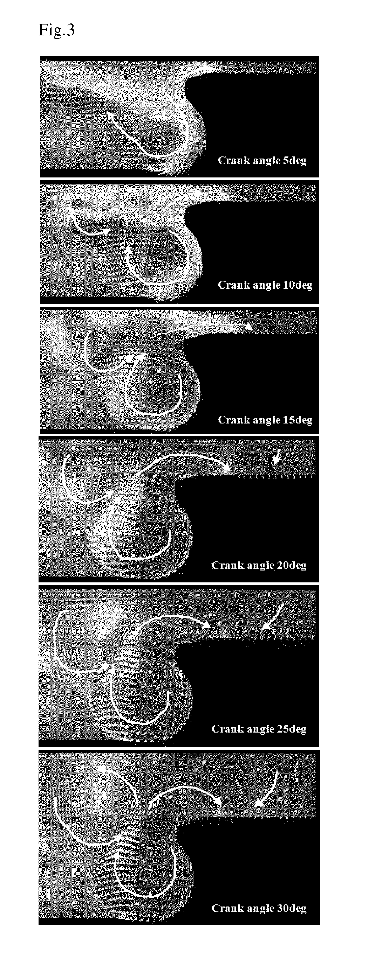

A process of mixing and combusting the fuel and the air will be described in more detail with reference to FIG. 3.

FIG. 3 is a diagram illustrating a comparison of the examples, in which fuel and air are mixed in the combustion bowl 50 of the related art, according to displacement of a crank angle.

As illustrated in FIG. 3, in the combustion bowl 50 of the related art, a large vortex is generated in the main combustion bowl 52 so that air and fuel are mixed, and then is conflicted with a vortex inside the combustion bowl 50 and another vortex generated at an upper end of the piston 30. The confliction of the vortexes facilitates mixing of the air and the fuel to oxidize soot.

However, the combustion bowl 50 of the related art is concentrated to the main combustion bowl 52, so that there is a problem in that air existing at an edge region far from the center of the upper portion of the piston 30 cannot be effectively used. The problem prohibits the achievement of an optimum mixing ratio of the fuel and the air, so that the problem is blamed for limiting the reduction of contaminants of exhaust gas.

In the meantime, US Patent No. 8,156,927 (April 27, 2012) suggests a technology for reducing contaminants of exhaust gas by forming a combustion bowl in an upper portion of a piston, in which the combustion bowl has a shape in which a stepped space is formed at an upper side of the combustion bowl, and improving a mixing action of air and fuel at an upper side (a portion far from the center) of the combustion bowl.

However, in the combustion bowl described in US Patent No. 8,156,927, it is possible to expect an effect of reducing soot according to an increase in efficiency of mixing air and fuel, but there is a possibility in that a fuel stagnation phenomenon is generated by a shape of a portion concavely formed at an upper side of the combustion portion, and thus soot and nitrogen oxide (NOx) are increased in exhaust gas due to local concentration of combustion.

To describe in detail, it is known that an amount of generated soot and an amount of generated nitrogen oxide are in inverse proportion to each other. That is, in order to minimize an amount of generated soot, it is necessary to implement complete combustion, and in this case, an amount of generated nitrogen oxide is increased. On the contrary, when an amount of generated nitrogen oxide is decreased, an amount of generated soot is increased.

Accordingly, a combustion bowl of a diesel engine capable of simultaneously reducing an amount of generated soot and an amount of generated nitrogen oxide has been demanded.

### SUMMARY

The present disclosure has been made in an effort to provide a combustion bowl shape of a direct injection diesel engine for reducing soot, which improves a combustion bowl shape of a direct injection diesel engine, matches a target point to which fuel is injected from the combustion bowl, maximally sets a mixing action of fuel and air in an entire region of the combustion bowl after injection of the fuel, and reduces soot in exhaust gas.

The present disclosure has also been made in an effort to provide a combustion bowl shape of a direct injection diesel engine for reducing soot, which maintains the same level of nitrogen oxide NOx as that of the related art while reducing soot by preventing combustion from being concentrated to a specific region of the combustion bowl.

A technical object to be achieved in the present disclosure is not limited to the aforementioned technical objects, and another not-mentioned technical object will be obviously understood by those skilled in the art from the description below.

An exemplary embodiment of the present disclosure provides a combustion bowl shape of a direct injection diesel engine for reducing soot, the shape including: a lip part 110 protruding from an internal circumferential surface; a main combustion bowl 120 formed at a lower side based on the lip part 120; and a sub combustion bowl 130 formed at an upper side based on the lip part 110, in which a diameter ratio of a combustion bowl entrance diameter of the sub combustion bowl 130 to a combustion bowl maximum diameter D2 of the main combustion bowl 120 is 1.10 to 1.40.

In the combustion bowl shape of the direct injection diesel engine for reducing soot, a diameter ratio (D3/D2) of the main combustion bowl entrance diameter D3 of the sub combustion bowl 130 and the combustion bowl maximum diameter D2 of the main combustion bowl 120 may be 1.15 to 1.35.

In the combustion bowl shape of the direct injection diesel engine for reducing soot according to the present disclosure, a depth ratio (H2/H1) of a combustion bowl maximum depth H2 of the main combustion bowl 120 to a lip curvature center depth H1 of the lip part 110 may be 2.0 to 3.0.

In the combustion bowl shape of the direct injection diesel engine for reducing soot according to the present disclosure, a depth ratio (H2/H1) of the combustion bowl maximum depth H2 of the main combustion bowl 120 to the lip curvature center depth H1 of the lip part 110 may be 2.2 to 2.8.

In the combustion bowl shape of the direct injection diesel engine for reducing soot according to the present disclosure, a fuel jet 42 is injected from an injector 40 to an inflection boundary of the lip part 110 and the main combustion bowl 120 as a target point tp, and when the combustion bowl 100 is divided based on a center line of the fuel jet 42, a ratio of a combustion bowl lower portion volume to a combustion bowl upper portion volume may be 7:3 to 8:2.

Other detailed matters of the exemplary embodiments are included in the detailed description and the drawings.

According to the combustion bowl shape of the direct injection diesel engine for reducing soot according to the present disclosure, which is configured as above, by improving the combustion bowl shape, a mixing action of air and fuel is entirely evenly performed inside the combustion bowl, so that efficiency of combustion is improved, and thus it is possible to minimize soot due to incomplete combustion even though the same level of nitrogen oxide (NOx) as that of the related art is generated.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a diagram for describing a combustion bowl shape of a direct injection diesel engine for reducing soot.

FIG. 2 is a diagram for describing a combustion bowl in the related art.

FIG. 3 is a diagram illustrating a comparison of examples, in which fuel and air are mixed in the combustion bowl of the related art, according to displacement of a crank angle.

FIG. 4 is a diagram for describing a combustion bowl shape of a direct injection diesel engine for reducing soot according to an exemplary embodiment of the present disclosure.

FIG. 5 is a diagram illustrating a comparison of examples, in which fuel and air are mixed in a combustion bowl shape of a direct injection diesel engine for reducing soot according to an exemplary embodiment of the present disclosure, according to displacement of a crank angle.

FIG. 6 is a diagram illustrating a comparison of combustion interpretation results of Comparative Example of the related art and an exemplary embodiment of the present disclosure according to displacement of a crank angle.

FIG. 7 is a diagram illustrating a comparison of a change development of nitrogen oxide and soot included in exhaust gas after combustion in a Comparative Example of the related art and an exemplary embodiment of the present disclosure.

FIG. 8 is a comparison graph of a discharge amount of soot according to a ratio of a diameter of a combustion bowl in a combustion bowl shape of a direct injection diesel engine for reducing soot according to an exemplary embodiment of the present disclosure.

FIG. 9 is a comparison graph of a discharge amount of soot according to a ratio of a depth of a combustion bowl in a combustion bowl shape of a direct injection diesel engine for reducing soot according to an exemplary embodiment of the present disclosure.

### DETAILED DESCRIPTION

In the following detailed description, reference is made to the accompanying drawing, which form a part hereof. The illustrative embodiments described in the detailed description, drawing, and claims are not meant to be limiting. Other embodiments may be utilized, and other changes may be made, without departing from the spirit or scope of the subject matter presented here.

Advantages and characteristics of the present disclosure, and a method of achieving the advantages and characteristics will be clear with reference to an exemplary embodiment described in detail together with the accompanying drawings.

Like reference numerals indicate like elements throughout the specification and drawings.

The terms used in the description are defined considering the functions of the present disclosure and may vary depending on the intention or usual practice of a manufacturer. Therefore, the definitions should be made based on the entire contents of the present specification.

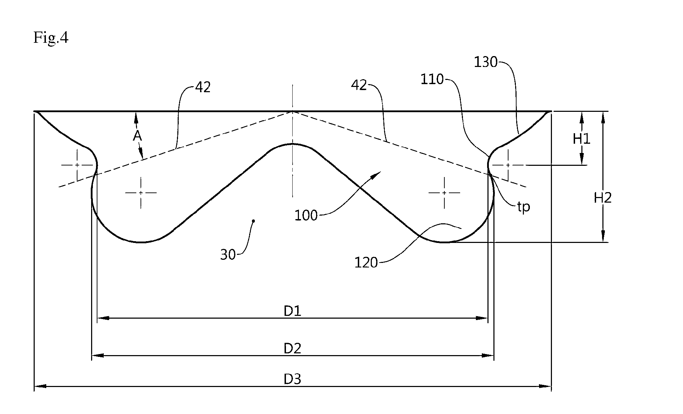

Hereinafter, a combustion bowl shape of a direct injection diesel engine for reducing soot according to an exemplary embodiment of the present disclosure will be described with reference to FIG. 4.

FIG. 4 is a diagram for describing a combustion bowl shape of a direct injection diesel engine for reducing soot according to an exemplary embodiment of the present disclosure.

As illustrated in FIG. 4, a combustion bowl 100 according to an exemplary embodiment of the present disclosure is formed in an upper portion of a piston 30.

A cross section of the combustion bowl 100 is formed with multiple curvatures, and more particularly, a lip part 110 protrudes from an internal circumferential surface of the combustion bowl 100, a main combustion bowl 120 is formed at a lower side of the lip part 110, and a sub combustion bowl 130 is formed at an upper side of the lip part 110.

The shape of the combustion bowl 100 will be expressed by a symbol and numerical values with reference to FIG. 4 below.

A: Fuel injection angle - an angle at which fuel is injected from an injector to the combustion bowl.

D: Cylinder liner internal diameter - an entire diameter of the combustion bowl, and a diameter of a bore.

D1: Lip part diameter - a minimum diameter of a protruding part in a shape protruding by the lip part 110.

D2: A main combustion bowl maximum diameter - a maximum diameter of the main combustion bowl 120.

D3: A combustion bowl entrance diameter - a diameter of an entrance of the combustion bowl.

H1: A lip curvature center depth - a depth (or height) from an upper surface of the piston 30 to a center of a curvature of a curvature shape of the lip part 110.

H2: A combustion bowl maximum depth - a depth (or height) from an upper surface of the piston 30 to a maximum depth of the combustion bowl 100.

**[Table 1]**

| D3/D2 | Discharge amount of soot at rpm - medium speed (g/kwh) | Discharge amount of soot at rpm - high speed (g/kwh) | Note |
|---|---|---|---|
| 1.05 | 1.00 | 1.00 | Shape of combustion bowl in related art |
| **1.10** | **0.75** | **0.61** | **Example** |
| **1.15** | **0.56** | **0.41** | **Example** |
| **1.20** | **0.50** | **0.30** | **Example** |
| **1.25** | **0.39** | **0.35** | **Example** |
| **1.30** | **0.39** | **0.33** | **Example** |
| **1.35** | **0.50** | **0.39** | **Example** |
| **1.40** | **0.61** | **0.54** | **Example** |
| 1.45 | 0.81 | 0.61 | Comparative Example |

The aforementioned Table 1 represents result values obtained by changing a size of a diameter ratio (D3/D2) and differently operating the engine when revolution per minute of an engine is a medium speed or a high speed. Constructional machinery may use power of an engine with standard output or high output, and the aforementioned Table 1 represents result values obtained by performing an operation at a revolution per minute as a medium speed for the standard output, and at a revolution per minute at a high speed for the high output.

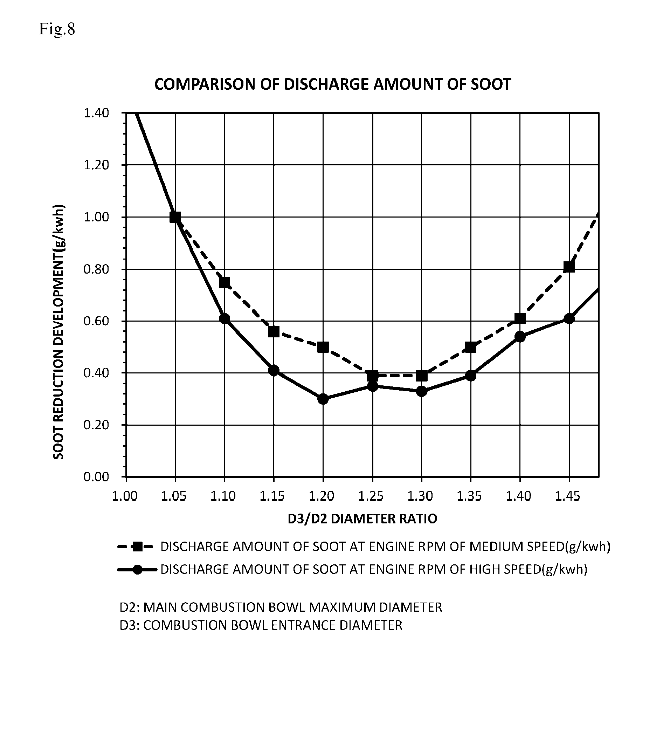

In the combustion bowl 100 according to the exemplary embodiment of the present disclosure, the lip part diameter D1 is provided to be smaller than the main combustion bowl maximum diameter D2 as illustrated in Table 1 and FIG. 8. The main combustion bowl maximum diameter D2 of the main combustion bowl 120 is provided to be smaller than the combustion bowl entrance diameter D3 of the sub combustion bowl 130.

More particularly, the lip part diameter D1 may be provided to be smaller than the main combustion bowl maximum diameter D2 by 3% to 10%.

The diameter ratio (D3/D2) of the combustion bowl entrance diameter D3 of the sub combustion bowl 130 to the main combustion bowl maximum diameter D2 of the main combustion bowl 120 may be provided with 1.10 to 1.40.

That is, it can be seen that in the combustion bowl shape of the related art in which the diameter ratio (D3/D2) is smaller than 1.10, an amount of generated soot is sharply increased as illustrated in Table 1 and FIG. 8, but in a case where the diameter ratio (D3/D2) is equal to or larger than 1.10, an amount of generated soot is remarkably decreased.

In the meantime, it can be seen that when the diameter ratio (D3/D2) is larger than 1.40, an amount of generated soot is sharply increased, but when the diameter ratio (D3/D2) is equal to or smaller than 1.40, an amount of generated soot is remarkably decreased.

Accordingly, it can be seen that the injection of the fuel and flow of a fluid become smooth, and a mixing action of the fuel and air is further activated, such that the soot is decreased.

In order to further improve an effect of decreasing generation of soot, the diameter ratio (D3/D2) of the combustion bowl entrance diameter D3 of the sub combustion bowl 130 to the main combustion bowl maximum diameter D2 of the main combustion bowl 120 may be provided with 1.15 to 1.35. Accordingly, as illustrated in Table 1 and FIG. 8, it can be seen that the amount of generated soot is remarkably decreased.

**[Table 2]**

| H2/H1 | Discharge amount of soot at rpm - medium speed (g/kwh) | Discharge amount of soot at rpm - high speed (g/kwh) | Note |
|---|---|---|---|
| 1.8 | 0.89 | 0.63 | Comparative Example |
| **2.0** | **0.56** | **0.48** | **Example** |
| **2.2** | **0.50** | **0.30** | **Example** |
| **2.4** | **0.39** | **0.35** | **Example** |
| **2.6** | **0.39** | **0.33** | **Example** |
| **2.8** | **0.50** | **0.41** | **Example** |
| **3.0** | **0.58** | **0.52** | **Example** |
| 3.5 | **0.86** | 0.78 | Comparative Example |
| 4.0 | 1.00 | 1.00 | Shape of combustion bowl in related art |

The aforementioned Table 2 represents result values obtained by changing a size of a depth ratio (H2/H1) and differently operating the engine when revolution per minute of an engine is a medium speed or a high speed. As described above, constructional machinery may use power of an engine with standard output or high output, and the aforementioned Table 2 represents result values obtained by performing an operation at a revolution per minute as a medium speed for the standard output, and at a revolution per minute as a high speed for the high output.

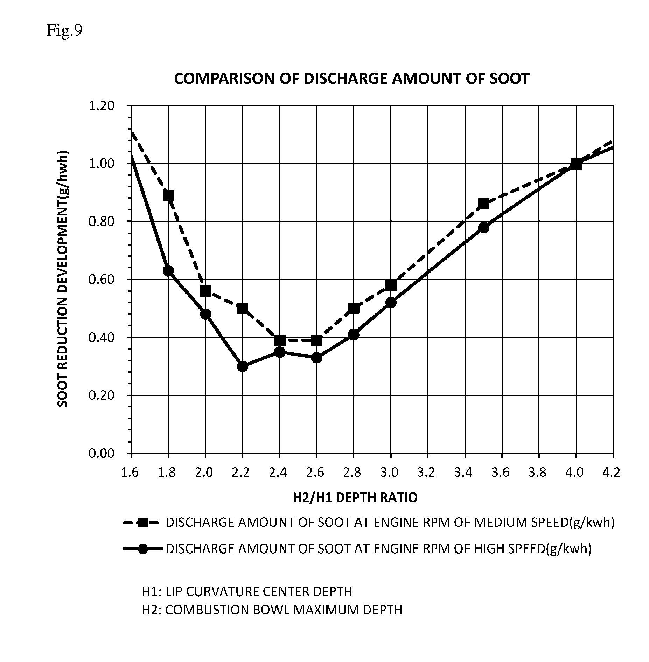

In the combustion bowl 100 according to the exemplary embodiment of the present disclosure, as illustrated in Table 2 and FIG. 9, the depth ratio (H2/H1) of the combustion bowl maximum depth H2 of the main combustion bowl 120 to the lip curvature center depth H1 of the lip part 110 may be provided with 2.0 to 3.0. To describe in detail, the depth ratio (H2/H1) has a range from 2.0 to 3.0, so that the fuel may be appropriately mixed with internal air and upper portion air of the main combustion bowl.

That is, it can be seen that in the combustion bowl shape of the related art in which the depth ratio (H2/H1) is smaller than 2.0, an amount of generated soot is sharply increased as illustrated in Table 2 and FIG. 9, but in a case where the depth ratio (H2/H1) is equal to or larger than 2.0, an amount of generated soot is remarkably decreased.

In the meantime, it can be seen that when the depth ratio (H2/H1) is larger than 3.0, an amount of generated soot is sharply increased, but when the depth ratio (H2/H1) is equal to or smaller than 3.0, an amount of generated soot is remarkably decreased.

Accordingly, it can be seen that the injection of the fuel and flow of a fluid become smooth, and a mixing action of the fuel and air is further activated, such that the soot is decreased.

In order to further improve an effect of decreasing generation of soot, the depth ratio (H2/H1) of the combustion bowl maximum depth H2 of the main combustion bowl 120 to the lip curvature center depth H1 of the lip part 110 may be provided with 2.2 to 2.8. Accordingly, as illustrated in Table 2 and FIG. 9, it can be seen that the amount of generated soot is remarkably decreased.

As described above, by designing and providing the diameter ratio (D3/D2) or the depth ratio (H2/H1) in an optimum shape, the mixing action of the fuel and the air at an upper portion of the combustion bowl may be more activated after the injection of the fuel, and it is possible to decrease the generation of soot due to incomplete combustion.

In the meantime, a center of a fuel jet 42 injected from the injector 40 is an inflection boundary of the lip part 110 and the main combustion bowl 120 as a target point tp, and when the combustion bowl 100 is divided based on a line of the fuel jet 42, that is, a fuel injection angle A, a ratio of a combustion bowl lower portion volume to a combustion bowl upper portion volume is 7:3 to 8:2.

As described above, a part of the main combustion bowl 120 has a larger volume than the lip part 110, so that the mixing action of the fuel and the air at an upper portion of the combustion bowl may be more activated after the injection of the fuel, and it is possible to decrease the generation of soot due to incomplete combustion.

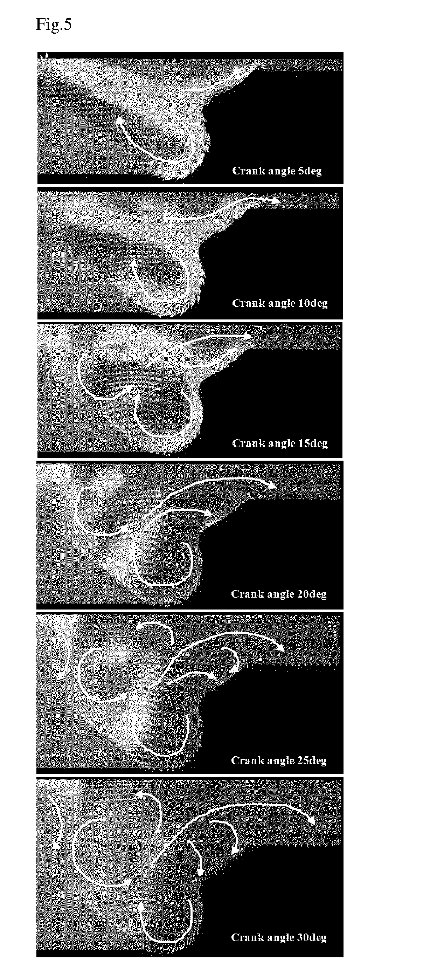

The mixing action of the fuel and the air will be described with reference to FIG. 5.

FIG. 5 is a diagram illustrating a comparison of examples, in which fuel and air are mixed in the combustion bowl shape of the direct injection diesel engine for reducing soot according to the exemplary embodiment of the present disclosure, according to displacement of a crank angle.

As illustrated in FIG. 5, the mixing of the fuel and the air may be further activated in the sub combustion bowl 130 according to the exemplary embodiment of the present disclosure, and efficiency of mixing the fuel and the air in the entire combustion bowl 100 may be improved.

In the meantime, considering a structural matter, such as an oil pass pipe for cooling the piston 30, the combustion bowl maximum depth H2 may be provided.

Accordingly, when the fuel is bumped and spread at the target point tp of the fuel injection according to the exemplary embodiment of the present disclosure, the fuel may be divided toward the lower portion of the combustion bowl and the upper portion of the combustion bowl with a predetermined ratio. That is, the fuel may be more effectively mixed with air at the upper end of the piston 30 and a position far from the center, as well as the air inside the combustion bowl 100, and thus complete combustion of fuel mixed gas may be achieved, thereby having an effect of decreasing toxic materials (soot and nitrogen oxide) included in exhaust gas.

On the other hand, the sub combustion bowl 130 may be formed in a flat shape or a concave shape so as to have a very thin surface depth th.

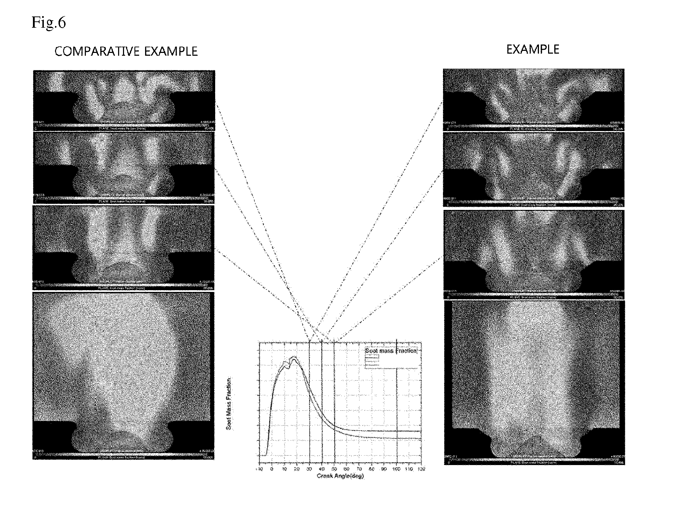

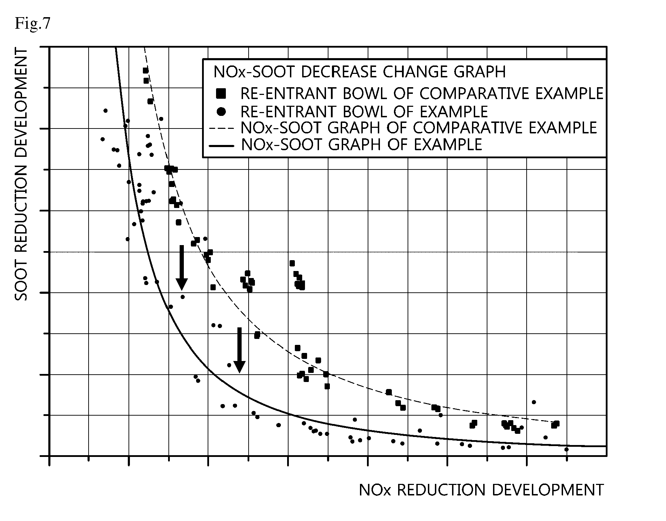

The aforementioned mixing action of the fuel and the air will be described in more detail with reference to FIGS. 6 and 7.

FIG. 6 is a diagram illustrating a comparison of combustion interpretation results of a Comparative Example of the related art and an exemplary embodiment of the present disclosure according to displacement of a crank angle.

As illustrated in FIG. 6, it can be seen that an air usage ratio is increased according to an increase in the vortex inside the combustion bowl of the example of the exemplary embodiment of the present disclosure, compared to the combustion bowl of the Comparative Example.

More particularly, it can be seen that when the mixing action of the fuel and the air at the upper portion of the combustion bowl is maximized inside the combustion bowl 100, the combustion of soot is actively performed according to the progress of the combustion even though a large amount of soot is generated at an initial time, and as a result, the amount of soot generated inside the combustion bowl is decreased.

A decrease development of soot and nitrogen oxide will be described in more detail with reference to FIG. 7.

FIG. 7 is a diagram illustrating a comparison of a change development of nitrogen oxide and soot included in exhaust gas after combustion in the Comparative Example of the related art and an exemplary embodiment of the present disclosure.

As illustrated in FIG. 7, it can be seen that by making the target point tp, at which the fuel jet 42 is injected to be bumped into the combustion bowl 100, head to the inflection boundary of the lip part 110 and the main combustion bowl 120, and providing a volume ratio of the upper side and the lower side based on the center of the fuel jet 42 with 7:3 to 8:2, the fuel and the air may be more completely mixed to achieve complete combustion, thereby remarkably reducing soot and nitrogen oxide.

This will be additionally described below. An amount of generated nitrogen oxide (NOx) is in inverse proportion (trade-off) to an amount of generated soot. Accordingly, the combustion bowl 100 according to the exemplary embodiment of the present disclosure is improved to a form in which a NOx-soot trade off curve is moved so as to simultaneously reduce the nitrogen oxide and the soot.

As illustrated in FIG. 7, it can be seen that the NOx-soot trade off curve of exhaust gas combusted by the combustion bowl 100 (chamfered re-entrant bowl) according to the exemplary embodiment of the present disclosure is relatively less sensitive, compared to the NOx-soot trade off curve of exhaust gas combusted by the combustion bowl (re-entrant bowl) of the Comparative Example of the related art.

This represents that the amount of soot may be decreased at the same level as the amount of generated nitrogen oxide (NOx). Otherwise, this means that the amount of nitrogen oxide (NOx) may be decreased at the same level as the amount of generated soot.

That is, it is possible to realize a decrease in nitrogen oxide (NOx) and soot included in the exhaust gas in a diesel engine to which the combustion bowl according to the exemplary embodiment of the present disclosure is applied.

The combustion bowl shape of the direct injection diesel engine for reducing soot according to the present disclosure may be used for reducing soot and nitrogen oxide (NOx) included in exhaust gas.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A combustion bowl shape of a direct injection diesel engine for reducing soot, comprising:
a lip part protruding from an internal circumferential surface;
a main combustion bowl formed at a lower side based on the lip part; and
a sub combustion bowl formed at an upper side based on the lip part,
wherein a diameter ratio of a combustion bowl entrance diameter of the sub combustion bowl to a main combustion bowl maximum diameter of the main combustion bowl is 1.10 to 1.40.

2. The combustion bowl shape of claim 1, wherein a diameter ratio of the combustion bowl entrance diameter of the sub combustion bowl to the main combustion bowl maximum diameter of the main combustion bowl is 1.15 to 1.35.

3. The combustion bowl shape of claim 1, wherein a depth ratio of a combustion bowl maximum depth of the main combustion bowl to a lip curvature center depth of the lip part is 2.0 to 3.0.

4. The combustion bowl shape of claim 1, wherein a depth ratio of the combustion bowl maximum depth of the main combustion bowl to the lip curvature center depth of the lip part is 2.2 to 2.8.

5. The combustion bowl shape of claim 1, wherein a fuel jet is injected from an injector to an inflection boundary of the lip part and the main combustion bowl as a target point, and when the combustion bowl is divided based on a center line of the fuel jet, a ratio of a combustion bowl lower portion volume to a combustion bowl upper portion volume is 7:3 to 8:2.
